# EUROPÄISCHE PATENTSCHRIFT

(11) **EP 1 238 187 B1**
(45) Veröffentlichungstag und Bekanntmachung des Hinweises auf die Patenterteilung: **16.03.2005**
(21) Anmeldenummer: 00977554.5
(22) Anmeldetag: 22.11.2000
(51) Int. Cl.: F01N 3/20, F01N 3/05

(54) **VORRICHTUNG ZUR ZUFÜHRUNG VON ABGASEN VON EINEM VERBRENNUNGSMOTOR ZU EINEM KATALYSATOR, INSBESONDERE SPEICHERKATALYSATOR**
METHOD FOR SUPPLYING EXHAUST GASES FROM AN INTERNAL COMBUSTION ENGINE TO A CATALYST, IN PARTICULAR A STORAGE CATALYST
DISPOSITIF D'AMENEE DES GAZ D'ECHAPPEMENT D'UN MOTEUR A COMBUSTION INTERNE A UN CATALYSEUR, NOTAMMENT UN CATALYSEUR A ACCUMULATION

(30) Priorität: 08.12.1999 DE 19959141; 27.09.2000 DE 10047815
(43) Veröffentlichungstag der Anmeldung: 11.09.2002
(73) Patentinhaber: Volkswagen Aktiengesellschaft, 38436 Wolfsburg (DE)
(72) Erfinder: SPIEGEL, Leo, 71665 Vaihingen/Enz (DE); ZILLMER, Michael, 38173 Sickte (DE); POTT, Ekkehard, 38518 Gifhorn (DE)
(86) Internationale Anmeldenummer: PCT/EP2000/011617
(87) Internationale Veröffentlichungsnummer: WO 2001/042632

(56) Entgegenhaltungen:
- DE-A- 2 303 773
- DE-A- 3 406 968
- DE-A- 3 439 998
- DE-A- 4 218 834
- DE-A- 4 322 949
- DE-A- 19 905 345
- DE-C- 19 742 762
- DE-U- 9 204 219
- FR-A- 2 720 782

## Beschreibung

Die Erfindung betrifft eine Vorrichtung zur Zuführung von Abgasen von einem Verbrennungsmotor zu einem Katalysator gemäß dem Oberbegriff des Anspruchs 1.

Zur Konvertierung von in Abgasen enthaltenen Stickoxiden bei Ottomotoren mit direkter Kraftstoffeinspritzung eines Fahrzeugs werden vorzugsweise NOx-Speicherkatalysatoren eingesetzt, weiche allerdings nur in einem verhältnismäßig schmalen Abgastemperaturfenster ausreichend hohe Konvertierungsraten tiefem. Dies führt zu einer nachteilhaften Einschränkung des wirkungsgradgünstigen Mager-Betriebsbereiches eines Otto-Verbrennungsmotors. Zur optimalen Reduzierung des Kraftstoffverbrauchs von direkt einspritzenden Ottomotoren mittels Magerbetrieb ist das Abgassystem derart auf den Motor abzustimmen, dass die Abgastemperaturen unmittelbar vor dem Eintritt in den Speicherkatalysator bei einem möglichst großen Motorbetriebsbereich innerhalb eines definierten Arbeitstemperaturfensters liegen. Die obere Grenze dieses Arbeitstemperaturfensters wird bei höheren Fahrzeuggeschwindigkeiten beziehungsweise bei höherer Motorbelastung erreicht. Bei Überschreiten dieser oberen Temperaturgrenze wird die Funktionsweise und die Lebensdauer (Dauerhaltbarkeit) des Speicherkatalysators negativ beeinträchtigt. Deshalb sind die Abgase zur Erweiterung des Mager-Betriebsbereiches des Ottomotors vor Eintritt in den Speicherkatalysator bei höheren Fahrzeuggeschwindigkeiten beziehungsweise höheren Motorbelastungen zu kühlen. Andererseits ist ferner dafür zu sorgen, dass der Speicherkatalysator nach einem Kaltstart des direkt einspritzenden Ottomotors möglichst schnell seine sogenannte Anspringtemperatur, das heißt die Betriebstemperatur zur optimalen Schadstoffkonvertierung, erreicht. Hierzu ist es notwendig, geeignete Maßnahmen zu treffen, welche unmittelbar nach dem Kaltstart des Ottomotors eine möglichst geringe Wärmeabfuhr aus den Abgasen an die Umgebung vor Eintritt in den Katalysator zulassen.

Aus DE 199 05 345 A1 ist eine gattungsgemäße Vorrichtung zur Zuführung von Abgasen von einem Verbrennungsmotor zu einer Abgasbehandlungseinrichtung mit einer Mehrzahl von Abgaszuführleitungen bekannt. Hierbei sind zwischen einem 3-Wege-Katalysator und einer NOₓ-Falle mehrere Abgaszuführleitungen angeordnet, welche bei einem relativ geringen Abgasmassenstrom einen relativ hohen Anteil der Wärme im Abgasstrom halten soll, während bei höheren Massenströmen ein vergleichsweise höherer Anteil der Wärme mit dem Abgasstrom abgeführt wird.

Aus der DE 34 06 988 A1 ist ein Verfahren zum Erzeugen einer optimalen Abgastemperatur für einen Katalysator von Verbrennungsmotoren bekannt. Hierbei wird das Motorabgas in zwei Teilströme geteilt, von denen einer gekühlt und der andere nicht gekühlt wird. Die Teilströme werden vor dem Katalysator wieder vereinigt.

Die DE 92 04 219 U1 beschreibt eine Abgasanlage für Verbrennungsmotoren bei der das Abgasrohr zwischen Brennkraftmaschine und Katalysator in ein kurzes und ein langes Rohr verzweigt, wobei an der Verzweigungsstelle eine Sperrvorrichtung angeordnet ist.

Aus der DE 43 22 949 A1 ist eine Abgasantage für eine Brennkraftmaschine bekannt, bei der eine Abgasleitung einen brennkraftmaschinennah angeordneten Katalysator stromab einer abgasdurchströmten Vorrichtung sowie eine den Abgasdurchlaß sperrende Abgasklappe enthält, mit einer gegenüber der Abgasleitung durchmessermäßig kleineren Bypassleitung zur Umgehung der Vorrichtung, die als Kühlvorschalldämpfer ausgebildet ist.

Der vorliegenden Erfindung liegt die Aufgabe zugrunde, eine gattungsgemäße Vorrichtung anzugeben, weiche in einfacher und effektiver Weise eine zuverlässige Einstellung der Abgastemperaturen am Eintritt der Abgase in den Katalysator erlaubt.

Diese Aufgabe wird gelöst durch eine Vorrichtung der o.g. Art mit den Merkmalen des Anspruchs 1. Diese Vorrichtung ist dadurch gekennzeichnet, daß die Abgaszuführleitungen zueinander beabstandet bis zum Katalysator als Rohrbündel angeordnet sind, wobei die als Wärmeleitung ausgebildete Abgaszuführleitung im Rohrbündel innenliegend angeordnet und von den als Wärmetauscher ausgebildeten Abgaszuführleitungen umfangsförmig und in Umfangsrichtung voneinander beabstandet umgeben ist und daß die als Wärmeleitung ausgebildete Abgaszuführleitung einen in Bezug auf die als Wärmetauscher ausgebildete Abgaszuführleitung kleineren Strömungsquerschnitt aufweist.

Eine derartig ausgebildete Vorrichtung ist vorteilhafterweise geeignet, die Abgastemperaturen am Eintritt in den Katalysator für einen möglichst großen Motorbetriebsbereich (höhere Fahrzeuggeschwindigkeiten beziehungsweise höhere Motorbelastung) als auch unmittelbar nach einem Kaltstart des Motors innerhalb eines definierten Arbeitstemperaturfensters zu halten. Hierzu dient ein schaltbares Verstellmittel, welches zur Verstellung eines Strömungsquerschnitts wenigstens einer der Abgaszuführieitungen, das heißt der Wärmeleitung und/oder des Wärmetauschers, geeignet ist. Dabei dient die Wärmeleitung zum möglichst schnellen Erreichen der Anspringtemperatur des Katalysators nach einem Kaltstart des Ottomotors, während der Wärmetauscher zur Abgaskühlung vor dem Katalysator und somit zur Verhinderung einer nicht erwünschten Überschreitung der oberen Temperaturgrenze des Arbeitstemperaturfensters insbesondere bei höheren Motorbelastungen dient. Bei einem Kaltstart des Ottomotors ist es beispielsweise möglich, dass die Wärmeleitung geöffnet ist (maximaler Strömungsquerschnitt), um eine maximale Übertragung von Abgaswärme an den Katalysator zu erlauben, und der Wärmetauscher teilweise oder vollständig geschlossen ist, so dass möglichst wenig Abgaswärme vor dem Katalysator an die Umgebung übertragen wird sondern zur Erwärmung des Katalysators genutzt wird, welcher möglichst schnell nach dem Kaltstart des Ottomotors seine Anspringtemperatur erreichen soll. Wenn der Katalysator seine Anspringtemperatur erreicht hat und der Ottomotor einer höheren Motorbelastung (höhere Fahrzeuggeschwindigkeiten) unterzogen wird, ist es vorteilhaft, den Wärmetauscher teilweise oder vollständig zu öffnen und gegebenenfalls die Wärmeleitung teilweise oder vollständig zu verschließen, um zu verhindern, dass aufgrund von zu großer Wärmeübertragung durch das Abgas an den Katalysator die obere Temperaturgrenze des Arbeitstemperaturfensters überschritten wird. Alle diese auf den jeweiligen Motorbetriebsbereich angepassten Einstellungen in Bezug auf den Strömungsquerschnitt einer oder mehrerer Abgaszuführleitungen zur Steuerung beziehungsweise Regelung der Wärmeübertragung durch das Abgas an den Katalysator lassen sich durch ein schaltbares Verstellmittel in einfacher, präziser und zuverlässiger Weise realisieren.

Vorzugsweise sind die Abgaszuführteitungen als voneinander getrennte Rohre ausgebildet. Da die Abgaszuführteitungen zwei unterschiedliche beziehungsweise entgegengesetzte Ziele verfolgen sollen, das heißt eine möglichst gute Übertragung von Abgaswärme an den Katalysator (Wärmeleitung) und eine möglichst reduzierte Übertragung von Abgaswärme an den Katalysator (Wärmetauscher), in Abhängigkeit des jeweiligen Motorbetriebsbereichs (Kaltstart, höhere Motorbelastung), ist es vorteilhaft, die Abgaszuführfeitungen als voneinander getrennte und vorzugsweise auch geringfügig beabstandete Rohre auszubilden. Durch die Trennung der Wärmeleitung vom Wärmetauscher lässt sich eine besonders effektive Einstellung der Wärmeübertragung durch die Abgase an den Katalysator realisieren.

Vorteilhafterweise ist die als Wärmeleitung ausgebildete Abgaszuführteitung mit einer Wärmeisolierung versehen. Mittels einer Wärmeisolierung der Wärmeleitung ist es in besonders einfacher und effektiver Weise möglich, die Abgaswärmeabfuhr an die Umgebung durch die Wärmeleitung auf ein Minimum zu reduzieren und somit eine möglichst gute Übertragung von Abgaswärme an den Katalysator zu gewährleisten. Dies wirkt sich besonders vorteilhaft bei einem Kaltstart des Ottomotors zur möglichst schnellen Erwärmung des Katalysators auf seine Anspringtemperatur aus.

Gemäß einer bevorzugten Ausführungsform erstreckt sich die als Wärmeleitung ausgebildete Abgaszuführleitung bis unmittelbar vor die Matrix des Katalysators. Durch diese Maßnahme kann ein schnelles Aufheizen eines lokal begrenzten Bereiches der Katalysatormatrix erreicht werden, um möglichst schnell die Anspringtemperatur des Katalysators zu erreichen, bei welcher sich der erwünschte Schadstoffumsatz (u.a. Schadstoffkonvertierung) einstellt.

Gemäß einer Weiterbildung der Erfindung ist die als Wärmetauscher ausgebildete Abgaszuführleitung derart an ihrer Wandung strukturiert, dass eine Oberflächenvergrößerung der Wärmeübertragungsfläche und/oder eine Turbulenzbildung des Abgasstromes in der Abgaszuführleitung erhalten wird. Dies dient zur Verstärkung der Kühlwirkung der als Wärmetauscher ausgebildeten Abgaszuführleitung in Bezug auf die dem Katalysator zuzuführenden Abgase. Durch die Turbulenzbildung der Abgase im Wärmetauscher wird eine nicht erwünschte Ausbildung einer Temperaturschichtung in der betreffenden Abgaszuführleitung aufgrund einer sich einstellenden kalten Außenströmung und heißen Innenströmung der Abgase verhindert. Einer derartigen Temperaturschichtung ist insbesondere bei zunehmender Länge der entsprechenden Abgaszuführleitung (Wärmetauscher) entgegenzuwirken.

Mit Vorteil ist die als Wärmetauscher ausgebildete Abgaszuführleitung mit einer die Wärmeabfuhr begünstigenden Beschichtung versehen. Mittels einer derartigen Beschichtung lässt sich in verhältnismäßig einfacher Weise eine effektive Erhöhung der Wärmeabfuhr, insbesondere Strahlungswärmeabfuhr, an die Umgebung erzielen.

Gemäß einer bevorzugten Ausführungsform ist die Außenfläche der als Wärmetauscher ausgebildeten Abgaszuführteitung mit einem die Wärmeabfuhr begünstigenden Außenluftstrom beaufschlagt. Hierdurch wird eine zusätzliche Erhöhung der Strahfungswärmeabfuhr durch den Wärmetauscher an die Umgebung erhalten. Dabei kann eine äußere Strukturierung der Wandung der als Wärmetauscher ausgebildeten Abgaszuführleitung zu einer erwünschten Turbulenz der Außenluft an der Rohrwand führen, wodurch eine besonders effektive Wärmeabfuhr durch den Wärmetauscher an die Umgebung erhalten wird. Ein derartiger Außenluftstrom kann beispielsweise durch gezielte Führung von Fahrtwind durch eine Eintrittsöffnung im Frontbereich des Fahrzeugs beziehungsweise der Unterbodenkapsel des Fahrzeugs erhalten werden.

Gemäß einer bevorzugten Ausführungsform weist das Verstellmittel ein Schaltelement auf, das mittels eines Verstellelements parameterabhängig steuerbar ist. Zur Verstellung eines Strömungsquerschnitts wenigstens einer der Abgaszuführleitungen heranziehbare Parameter können die Kühlmitteltemperatur des Motors, die Abgastemperatur vor und/oder hinter dem Katalysator (in Abgasströmungsrichtung gesehen), die Katalysatortemperatur und/oder der Abgasmassenstrom sein. Der Abgasmassenstrom als Verstellparameter dient dazu, die Entstehung von unzulässig hohen Abgasgegendrücken bei überaus großen Abgasmassenströmen zu vermeiden.

Mit Vorteil ist das Schaltelement als entsprechend dem Rohrbündel mit Durchgangsöffnungen versehene, drehbare Scheibe ausgebildet. Eine mit entsprechenden Durchgangsöffnungen versehene drehbare Scheibe ist geeignet, gleichzeitig und in präziser Weise bei entsprechender Drehung den jeweiligen Strömungsquerschnitt von vorzugsweise mehreren Abgaszuführleitungen parameterabhängig zu verstellen. Dabei ermöglicht eine scheibenartige Ausgestaltung des Schaltelements die Realisierung einer besonders kompakten Vorrichtung.

Gemäß einer bevorzugten Ausführungsform ist das Verstellelement als mittels eines elektrischen Stellantriebs betätigbare Schaltstange ausgebildet. Ein derartig ausgebildetes Verstellelement erlaubt eine zuverlässige und präzise Verstellung (Drehung) des Schaltelements.

Vorteilhafterweise kann die Verstellung (Drehung) des als Scheibe ausgebildeten Schaltelements mittels eines an die jeweils vorliegenden konstruktiven Gegebenheiten angepassten Verstellelements erfolgen. Dabei kann das Verstellelement z. B. als Unterdruckdose ausgebildet sein, um eine Drehung des Schaltelements in präziser und zuverlässiger Weise hervorzurufen.

Gemäß einer weiteren, alternativen Ausführungsform ist das Verstellelement als elektromagnetische Verstelleinrichtung ausgebildet, die eine Wicklung aufweist, mittels welcher das als Anker wirkende Schaltelement in Drehung versetzbar ist. Ein derart ausgebildetes und funktionierendes Verstellmittel zeichnet sich durch eine konstruktiv besonders kompakte Ausgestaltung und gleichzeitig eine präzise und zuverlässige Verstellung des Strömungsquerschnitts einer oder mehrerer Abgaszuführleitungen aus.

Darüber hinaus kann das Verstellelement auch hydraulisch ausgebildet sein.

Mit Vorteil erfolgt die Verstellung des Schaltelements in Form einer Zweipunktschaltung. Mittels einer Zweipunktschaltung werden die entsprechenden Abgaszuführleitungen je nach Bedarfsfall (Kaltstart, höhere Motorbelastung) vollständig geschlossen oder vollständig geöffnet, wobei gegebenenfalls zwischen der als Wärmeleitung und der als Wärmetauscher ausgebildeten Abgaszuführleitung beziehungsweise Leitungen differenziert werden kann. Bei einer Zweipunktschaltung handelt es sich um eine verhältnismäßig einfach realisierbare Schaltung zur Verstellung des Schaltelements.

Gemäß einer alternativen Ausführungsform erfolgt die Verstellung des Schaltelements in stufenlos einstellbaren Zwischenstellungen. Eine stufenlose Versteifung des Strömungsquerschnitts der entsprechenden Abgaszuführleitung beziehungsweise Leitungen erlaubt eine überaus präzise Einstellung der Temperatur des Katalysators, insbesondere des NOx-Speicherkatalysators, auf eine optimale Betriebstemperatur bei einem verhältnismäßig weiten Motorbetriebsbereich. Auch hier kann zwischen den Abgaszuführleitungen unterschieden werden, welche die Funktion einer Wärmeleitung beziehungsweise eines Wärmetauschers aufweisen.

Mit Vorteil ist die als Wärmeleitung ausgebildete Abgaszuführleitung koaxial in Bezug auf eine Drehachse des Schaltelements angeordnet. Gemäß diesem Ausführungsbeispiel enthält die Vorrichtung eine Wärmeleitung, welche in Bezug auf die Drehachse des Schaltelements und eine entsprechende Durchgangsöffnung des Schaltelements koaxial angeordnet ist. Eine Drehung des Schaltelements verursacht somit keine Verstellung des Strömungsquerschnitts der Wärmeleitung, sondern lediglich der Strömungsquerschnitte der außenliegenden, als Wärmetauscher ausgebildeten Abgaszuführieitungen. Die Wärmeleitung befindet sich somit entsprechend dieser Ausführungsform immer in einem geöffneten Zustand, während die als Wärmetauscher ausgebildeten Abgaszuführleitungen (beziehungsweise Abgaszuführleitung) mittels Verstellung des Schaltelements in Bezug auf die Zuführung von Abgasen zum Katalysator geöffnet, geschlossen oder gegebenenfalls teilweise geschlossen werden können.

Gemäß einer alternativen Ausführungsform ist die als Wärmeleitung ausgebildete Abgaszuführteitung in Bezug auf eine Drehachse des Schaltelements radial beabstandet angeordnet. Bei dieser Ausführungsform werden die Strömungsquerschnitte sowohl der Wärmeleitung als auch des außen angeordneten Wärmetauschers bei Verstellung des Schaltelements verändert, da alle Durchgangsöffnungen des Schaltelements in Bezug auf die Drehachse beabstandet sind und somit bei einer Drehung des Schaltelements eine Relativverschiebung aller Durchgangsöffnungen in Bezug auf die entsprechenden Öffnungen der Abgaszuführleitungen (Wärmeleitung und Wärmetauscher) hervorrufen.

Mit Vorteil weist das Schaltelement eine zentrale Scheibe und einen in Bezug auf die Scheibe koaxialen, äußeren und relativ zur Scheibe drehbaren Ring auf, wobei die Scheibe entsprechend den als Wärmeleitungen und der Ring entsprechend den als Wärmetauscher ausgebildeten Abgaszuführleitungen mit Durchgangsöffnungen versehen ist. In dieser Weise ist es möglich, dass die Scheibe und der Ring zur Verstellung der entsprechenden Strömungsquerschnitte der zugehörigen Abgaszuführleitungen (Wärmeleitung, Wärmetauscher) mittels eines Verstellelements unabhängig voneinander ansteuerbar sind, so dass die gewünschte Betriebstemperatur des Katalysators in äußerst präziser Weise eingestellt werden kann.

Vorzugsweise ist das als Scheibe ausgebildete Schaltelement unmittelbar eingangsseitig vor dem Katalysator angeordnet. Hierdurch wird eine konstruktiv verhältnismäßig einfache Ausgestaltung der Vorrichtung ermöglicht, da wenigstens die als Wärmetauscher ausgebildete Abgaszuführleitung beziehungsweise Leitungen lediglich einseitig (in Bezug auf das Schaltelement eingangsseitig) mit dem jeweiligen Durchgangsloch des Schaltelements in Wirkkontakt stehen.

Im folgenden wird die Erfindung anhand mehrerer, bevorzugter Ausführungsbeispiele unter Bezugnahme auf die Zeichnungen beschrieben. Es zeigen:
- Figur 1:: eine schematische Seitenansicht einer teilweise dargestellten und mit einem Katalysator verbundenen Abgaszuführvorrichtung;
- Figur 2:: eine schematische Frontalansicht gemäß der Schnittlinie II-II der Vorrichtung entsprechend Figur 1;
- Figur 3:: eine schematische Frontalansicht einer alternativen Ausführungsform der Vorrichtung;
- Figuren 4, 6, 8, 10, 12: eine schematische Seitenansicht verschiedener Ausführungsformen einer als Wärmetauscher ausgebildeten Abgaszuführleitung, und
- Figuren 5, 7 9, 11, 13: eine schematische Frontalansicht der Abgaszuführleitung gemäß den Figuren 4, 6, 8, 10 und 12.

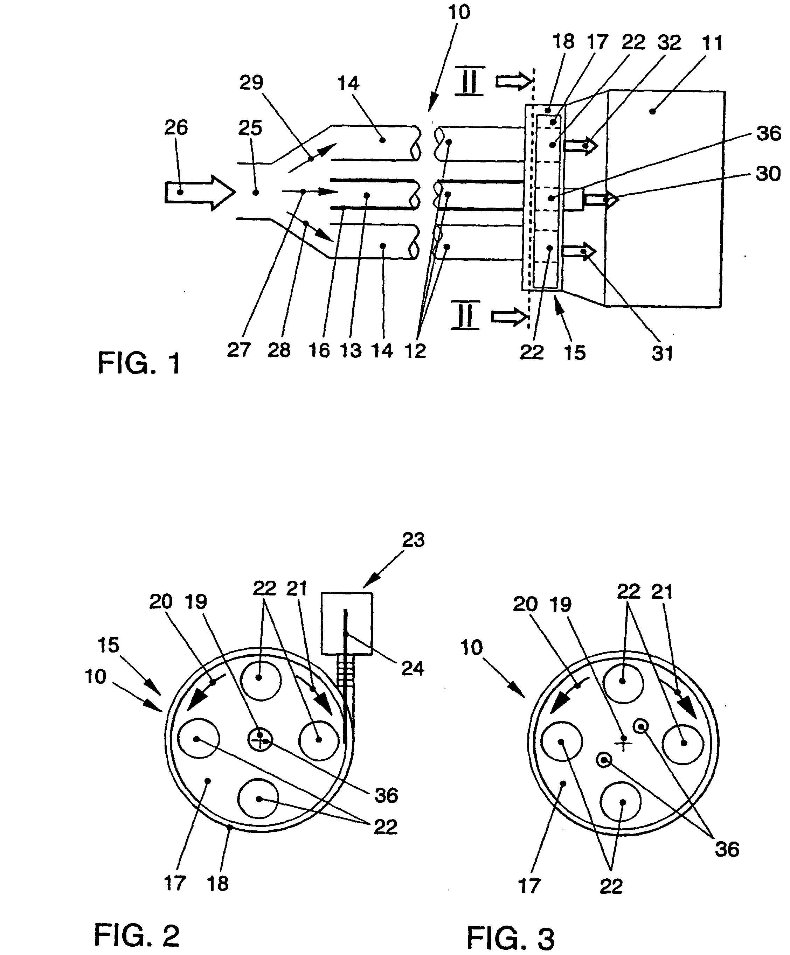

Figur 1 zeigt eine allgemein mit 10 bezeichnete Vorrichtung zur Zuführung von Abgasen von einem Verbrennungsmotor eines Fahrzeugs (nicht dargestellt) zu einem Katalysator 11, insbesondere einem NOx-Speicherkatalysator. Die Vorrichtung 10 enthält eine Mehrzahl an Abgaszuführleitungen 12, welche eingangsseitig mit einem gemeinsamen Abgasrohr 25 verbunden sind und ausgangsseitig unter Zwischenanordnung eines schaltbaren Verstellmittels 15 zum Katalysator 11 führen. Die Abgaszuführleitungen 12 sind als voneinander getrennte Rohre ausgebildet und zueinander beabstandet als Rohrbündel angeordnet, wobei eine als Wärmeleitung 13 ausgebildete Abgaszuführleitung 12 im Rohrbündel innenliegend angeordnet und von einer Mehrzahl von als Wärmetauscher 14 ausgebildeten Abgaszuführteitungen 12 umfangsförmig umgeben ist. Die Abgase werden gemäß der Pfeillinie 26 vom nicht dargestellten Verbrennungsmotor durch das Abgasrohr 25 den jeweiligen Abgaszuführleitungen 12 entsprechend den Pfeillinien 27, 28, 29 zugeführt, welche bei entsprechender Schaltung des Verstellmittels 15 die jeweiligen Abgasströme gemäß den Pfeillinien 30, 31, 32 an den Katalysator 11 weiterleiten. Die als Wärmeleitung 13 ausgebildete Abgaszuführleitung 12 dient zur begünstigten Übertragung von Abgaswärme an den Katalysator 11, während die als Wärmetauscher 14 ausgebildeten Abgaszuführieitungen 12 zum begünstigten Entzug von Abgaswärme vor dem Katalysator vorgesehen sind. Das schaltbare Verstellmittel 15 ist geeignet, den Strömungsquerschnitt der jeweiligen als Wärmetauscher 14 ausgebildeten Abgaszuführleitungen 12 zu variieren.

Entsprechend Figur 2 weist das Verstellmittel 15 ein Schaltelement 17 auf, das mittels eines Verstellelements 23 parameterabhängig steuerbar ist. Das Schaltelement 17 ist als eine in einem Gehäuse 18 um eine Drehachse 19 gemäß den Pfeillinien 20 und 21 drehbare Scheibe ausgebildet, welche entsprechend der Anordnung der Abgaszuführleitung 12 zu einem Rohrbündel mit Durchgangsöffnungen 22, 36 versehen ist. Dabei sind die Durchgangsöffnungen 22 in einer bestimmten Schaltstellung des Verstellmittels 15 beziehungsweise des drehbaren Schaltelements 17 in Bezug auf die als Wärmetauscher 14 ausgebildeten Abgaszuführleitungen 12 fluchtend angeordnet (siehe auch Figur 1). Entsprechend der Ausführungsform von Figur 1 und 2 ist die Durchgangsöffnung 36 unabhängig von der Schaltstellung des Verstellmittels 15 beziehungsweise des Schaltelements 17 fluchtend in Bezug auf die als Wärmeleitung 13 ausgebildete Abgaszuführleitung 12 angeordnet.

Wie in den Figuren 1 und 2 dargestellt ist, weist die als Wärmeleitung 13 ausgebildete Abgaszuführleitung 12 vorzugsweise einen in Bezug auf die als Wärmetauscher 14 ausgebildeten Abgaszuführleitungen 12 kleineren Strömungsquerschnitt auf. In dieser Weise erfolgt durch die Wärmeleitung 13 eine verhältnismäßig geringe Übertragung von Abgaswärme an die Umgebung (kleine Wärmeübertragungsfläche der Wärmeleitung 13). Die als Wärmetauscher 14 ausgebildeten Abgaszuführleitungen 12 weisen dagegen eine möglichst große Wärmeübertragungsfläche auf, um eine effektive Wärmeübertragung an die Umgebung zu begünstigen. Die als Wärmeleitung 13 ausgebildete Abgaszuführleitung 12 ist ferner mit einer Wärmeisolierung 16 versehen (siehe Figur 1), um möglichst viel Abgaswärme an den Katalysator 11 übertragen zu können. Die Wärmeleitung 13 erstreckt sich vorzugsweise bis unmittelbar vor die Matrix (nicht dargestellt) des Katalysators 11, um ein möglichst schnelles Aufheizen eines lokalbegrenzten Bereiches der Katalysatormatrix zu ermöglichen.

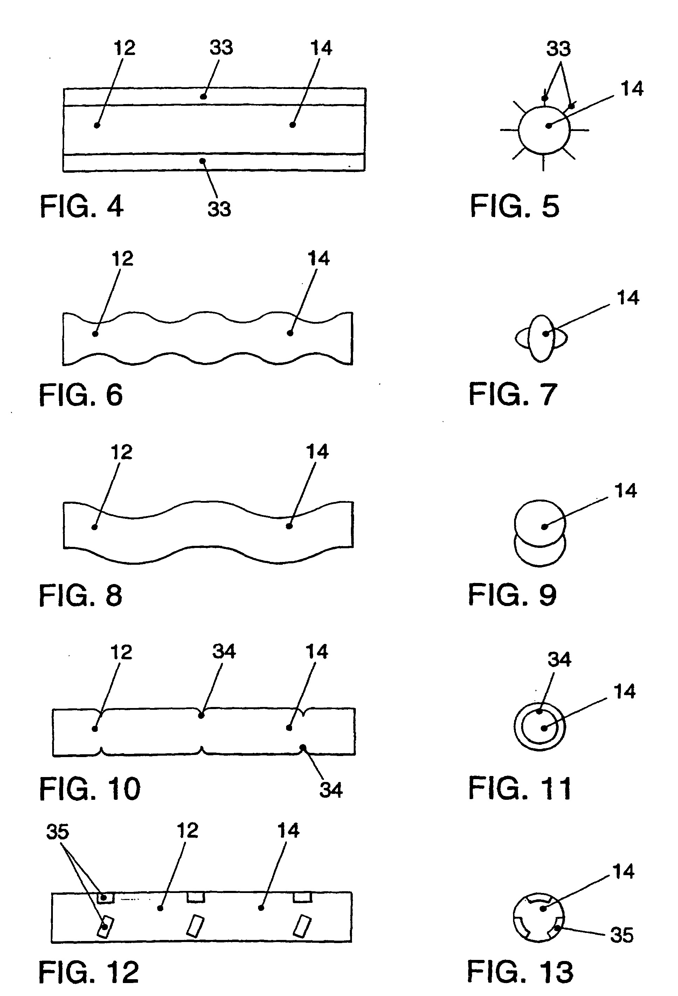

Die als Wärmetauscher 14 ausgebildeten Abgaszuführleitungen 12 sind vorzugsweise derart an ihrer Wandung strukturiert ausgebildet, dass eine Oberflächenvergrößerung der Wärmeübertragungsfläche und/oder eine Turbulenzbildung des Abgasstromes (Pfeillinie 28, 29 in Figur 1) in der jeweiligen Abgaszuführleitung 12 erhalten wird. In den Figuren 4 bis 13 sind verschiedene Möglichkeiten einer derartigen Strukturierung dargestellt. Die als Wärmetauscher 14 ausgebildete Abgaszuführleitung 12 gemäß den Figuren 4 und 5 ist mit außen angeordneten, umfangsförmig gleichmäßig verteilten und nach außen abstehenden Rippen 33 versehen. Die Rippen 33 dienen zur Oberflächenvergrößerung der Wärmeübertragungsfläche der Abgaszuführleitung 12 und somit zu einer verbesserten Wärmeübertragung an die Umgebung. Die Figuren 6, 7 zeigen eine als Wärmetauscher 14 ausgebildete Abgaszuführleitung 12, welche eine in Längserstreckung wechselnde Ovalität aufweist. Dies führt sowohl zu einer Oberflächenvergrößerung als auch zu einer Turbulenzbildung des durch die Abgaszuführleitung 12 strömenden Abgasstromes. In den Figuren 8, 9 ist eine in Längsrichtung wellenförmige Abgaszuführleitung 12 dargestellt. Auch hier wird eine Oberflächenvergrößerung und eine Turbulenzbildung des Abgasstromes in der Abgaszuführleitung 12 erhalten. Die Abgaszuführleitung 12 gemäß den Figuren 10, 11 ist umfangsförmig mit nach innen sich erstreckenden Eindrücken 34 versehen, wodurch sowohl eine Oberflächenvergrößerung der Wärmeübertragungsfläche als auch eine Turbulenzbildung des durchströmenden Abgasstromes erhalten wird. Die Figuren 12, 13 zeigen eine Abgaszuführleitung 12, welche im Innem mit Sicken 35 versehen ist, wobei die Sicken 35 in Durchflussrichtung auch schräggestellt sein können. Die Sicken 35 dienen zu einer Turbulenzbildung des Abgasstromes in der Abgaszuführleitung 12 und ermöglichen gleichzeitig eine Oberflächenvergrößerung der Wärmeübertragungsfläche der Abgaszuführleitung 12. Gemäß einer nicht dargestellten Ausführungsform können die als Wärmetauscher 14 ausgebildeten Abgaszuführleitungen 12 zur Turbulenzerhöhung im Querschnitt auch als rechteckige, dreieckige, halbrunde oder halb ovakförmige Rohre ausgebildet sein. Dabei dient die Turbutenzerzeugung in den als Wärmetauscher 14 ausgebildeten Abgaszuführleitungen 12 insbesondere zur Erhöhung des Wärmeübergangs vom heißen Abgas an die Außenwandung der entsprechenden Abgaszuführleitung 12. Ferner wird durch eine Turbulenzbildung des Abgases in der Abgaszuführleitung 12 eine sich mit zunehmender Leitungstänge ausbildende Temperaturschichtung, das heißt die Bildung einer äußeren kalten Abgasströmung und einer inneren heißen Abgasströmung, verhindert.

Gemäß einer nicht dargestellten Ausführungsform können die als Wärmetauscher 14 ausgebildeten Abgaszuführleitungen mit einer die Wärmeabfuhr begünstigenden Beschichtung versehen sein und/oder deren gegebenenfalls strukturierte Außenfläche mit einem die Wärmeabfuhr begünstigenden Außenluftstrom beaufschlagt werden.

Die Vorrichtung 10 gemäß den Figuren 1 und 2 arbeitet nach folgendem Funktionsprinzip: Bei einem Kaltstart des Verbrennungsmotors beziehungsweise in einer Motorwarmlaufphase, das heißt in einer Phase, in welcher der Katalysator noch nicht seine Anspringtemperatur erreicht hat, wird das Verstellmittel 15 derart geschaltet, dass mittels einer entsprechenden Drehung des Schaltelements 17 um die Drehachse 19 der Durchfluss durch die als Wärmetauscher 14 ausgebildeten Abgaszuführleitungen 12 vollständig oder zumindest teilweise versperrt wird. In dieser Schaltstellung des Schaltelements 17 sind die Durchgangsöffnungen 22 somit nicht mehr fluchtend in Bezug auf die als Wärmetauscher 14 ausgebildeten Abgaszuführleitungen 12 angeordnet. Die innenliegende Wärmeleitung 13 bleibt auch bei dieser Schaltstellung des Schaltelements 17 geöffnet, da sie in Bezug auf die Drehachse 19 des Schaltelements 17 koaxial angeordnet ist. In dieser Schaltstellung wird heißes Abgas gemäß den Pfeillinien 26, 27 durch die Wärmeleitung 13 entlang der Pfeillinie 30 in den Katalysator 11 geleitet. Wenn der Katalysator 11 seine Anspringtemperatur erreicht hat, wird das Schaltelement 17 mittels des Verstellelements 23 entsprechend den Pfeillinien 20 beziehungsweise 21 derart um die Drehachse 19 gedreht, bis die Durchgangsöffnungen 22 mit den entsprechenden, als Wärmetauscher 14 ausgebildeten Abgaszuführleitungen 12 fluchten. In dieser Schaltstellung wird heißes Abgas gemäß den Pfeillinien 26, 28, 29 in den Wärmetauscher 14 geleitet, um dort abgekühlt zu werden und als kalter Abgasteilstrom gemäß den Pfeillinien 31, 32 zum Katalysator 11 weitergeleitet zu werden. Es wird somit der eingangsseitig heiße Abgasstrom (Pfeillinie 26) ausgangsseitig in einen heißen Abgasteilstrom (Pfeillinie 30) und mehrere kalte Abgasteilströme (Pfeillinien 31, 32) umgewandelt. Aufgrund der parameterabhängigen Schaltung des Verstellmittels 15 wird gewährleistet, dass der Katalysator 11 möglichst schnell seine Anspringtemperatur erreicht, um ohne größere Verzögerungszeiten eine korrekte Stickoxidkonvertierung zu ermöglichen, und dass der Katalysator 11 nach Erreichen seiner Anspringtemperatur bei höheren Motorbelastungen nicht eine obere Temperaturgrenze eines definierten Abgastemperaturfensters, innerhalb welchem eine korrekte und effektive Konvertierung von Stickoxid durch den Katalysator 11 erfolgen kann, überschreitet.

Als Schaltparameter dienen insbesondere die Kühlmitteltemperatur des Motors, die Abgastemperatur in Strömungsrichtung vor und/oder hinter dem Katalysator, die Katalysatortemperatur und/oder der Abgasmassenstrom. Da bei hohen Abgasmassenströmen noch während der Katalysatoraufheizphase unzulässig hohe Abgasgegendrücke entstehen können, müssen die als Wärmetauscher 14 ausgebildeten Abgaszuführteitungen 12 auch bei einer Katalysatortemperatur unterhalb der Anspringtemperatur teilweise oder vollständig durch geeignete Schaltung des Verstellmittels 15 geöffnet werden.

Vorzugsweise erfolgt die Verstellung des Schaltelements 17 in stufenlos einstellbaren Zwischenstellungen. Durch eine stufenlose Freigabe der jeweiligen Strömungsquerschnitte der als Wärmetauscher 14 ausgebildeten Abgaszuführleitungen 12 in Abhängigkeit der obengenannten Schaltparameter lässt sich eine überaus präzise und variable Einstellung der Betriebstemperatur des Katalysators 11 erzielen. Insbesondere kann bei hohen Massenströmen während der Katalysatoraufheizphase vermieden werden, dass durch vollständiges Öffnen der als Wärmetauscher 14 ausgebildeten Abgaszuführleitungen 12 die Kühlleistung zu stark ansteigt und somit ein schnelles Erreichen der Anspringtemperatur des Katalysators verhindert wird. Es ist allerdings auch denkbar, dass die Verstellung des Schaltelements 17 in Form einer Zweipunktschaltung erfolgt. Bei einer Zweipunktschaltung werden die entsprechenden Abgaszuführleitungen 12 durch Schalten des Verstellmittels 15 entweder vollständig geöffnet oder vollständig verschlossen.

Eine alternative Ausführungsform in Bezug auf die Anzahl und Anordnung der Wärmeleitung 13 ist in Figur 3 dargestellt. Entsprechend dieser Ausführungsform sind zwei voneinander getrennte und zueinander beabstandete Durchgangsöffnungen 36 am Schaltelement 17 vorgesehen. Die Durchgangsöffnungen 36 sind in Bezug auf die Drehachse 19 des Schaltelements 17 radial beabstandet angeordnet. Die Vorrichtung 10 ist in entsprechender Weise mit zwei Wärmeleitungen 13 versehen (nicht in den Figuren dargestellt). Eine derartige Anordnung der Durchgangsöffnungen 36 und der zugehörigen Wärmeleitungen 13 verursacht bei einer Drehung des Schattelements 17 um die Drehachse 19 eine Verstellung des jeweiligen Strömungsquerschnitts sowohl der als Wärmetauscher 14 also auch der als Wärmeleitung 13 ausgebildeten Abgaszuführleitungen 12. Somit wird die Kühlleistung der Vorrichtung 10 gesteigert, da auch der Strömungsquerschnitt der innenliegenden Wärmeleitungen 13 durch Schalten des Verstellmittels 15 veränderbar ist. Die Anzahl der als Wärmetauscher 14 und der als Wärmeleitung 13 ausgebildeten Abgaszuführleitungen 12 sowie deren Strömungsquerschnitte können an den jeweiligen Anwendungsfall angepasst werden.

Gemäß einer weiteren, nicht dargestellten, alternativen Ausführungsform weist das Schaltelement 17 eine zentrale Scheibe und einen in Bezug auf die Scheibe koaxialen, äußeren und relativ zur Scheibe drehbaren Ring auf, wobei die Scheibe entsprechend den als Wärmeleitungen 13 und der Ring entsprechend den als Wärmetauscher 14 ausgebildeten Abgaszuführleitungen 12 mit Durchgangsöffnungen 22, 36 versehen ist. Diese alternative Ausführungsform ermöglicht eine unabhängige Einstellung der Strömungsquerschnitte der Wärmeleitungen 13 einerseits und der als Wärmetauscher 14 ausgebildeten Abgaszuführleitungen 12 andererseits. Für den Fall, dass trotz geöffneter, als Wärmetauscher 14 ausgebildeter Abgaszuführleitungen 12 der Katalysator 11 einen festgelegten oberen Temperaturgrenzwert überschreitet, können die Durchgangsöffnungen 36 mittels Verstellung des Schaltelements 17 teilweise oder vollständig verschlossen werden. Dabei kann die Drehung der zentralen Scheibe und des äußeren Rings mittels zwei getrennter Verstellelemente beziehungsweise mittels eines einzigen, geeignet ausgebildeten Verstellelements erzeugt werden.

Das Verstellelement 23 kann gemäß einer alternativen Ausführungsform als Unterdruckdose oder auch als elektromagnetische Verstelleinrichtung ausgebildet sein, die eine Wicklung aufweist, mittels welcher das als Anker wirkende Schaltelement 17 in Drehung versetzbar ist.

Das als Scheibe ausgebildete Schaltelement 17 ist unmittelbar eingangsseitig vor dem Katalysator 11 angeordnet.

Unterschreiten die Abgastemperatur beziehungsweise die Katalysatortemperatur einen festgelegten unteren Grenzwert, können die als Wärmetauscher 14 ausgebildeten Abgaszuführleitungen 12 teilweise oder vollständig durch entsprechende Verstellung des Schaltelements 17 durch das Verstellelement 23 verschlossen werden.

Durch nicht dargestellte und an sich bekannte Messmittel und eine zentrale Steuerungseinheit können die jeweiligen Werte der Schaltparameter ermittelt und entsprechend verarbeitet werden und gegebenenfalls eine automatische Schaltung des Verstellmittels 15 eingeleitet werden.

## Patentansprüche

1. Vorrichtung zum Zuführen von Abgasen von einem Verbrennungsmotor zu einem Katalysator, insbesondere Speicherkatalysator, wobei die Vorrichtung eine Mehrzahl an Abgaszuführleitungen enthält mit wenigstens einer Abgaszuführleitung (12) als Wärmeleitung (13) zur begünstigten Übertragung von Abgaswärme an den Katalysator (11) und mit wenigstens einer anderen Abgaszuführteitung (12) als Wärmetauscher (14) zum begünstigten Entzug von Abgaswärme vor dem Katalysator (11), wobei ein schaltbares Verstellmittel (15) zur Verstellung eines Strömungsquerschnitts wenigstens einer der Abgaszuführlsitungen (12) vorgesehen ist, **dadurch gekennzeichnet, daß** die Abgaszuführleitungen (12) zueinander beabstandet bis zum Katalysator als Rohrbündel angeordnet sind, wobei die als Wärmeleitung (13) ausgebildete Abgaszuführleitung (12) im Rohrbündel innenliegend angeordnet und von den als Wärmetauscher (14) ausgebildeten Abgaszuführleitungen (12) umfangsförmig und in Umfangsrichtung voneinander beabstandet umgeben ist und daß die als Wärmeleitung (13) ausgebildete Abgaszuführleitung (12) einen in Bezug auf die als Wärmetauscher (14) ausgebildete Abgaszuführleitung (12) kleineren Strömungsquerschnitt aufweist.

2. Vorrichtung nach Anspruch 1, **dadurch gekennzeichnet, dass** die Abgaszuführleitungen (12) als voneinander getrennte Rohre ausgebildet sind.

3. Vorrichtung nach einem der vorhergehenden Ansprüche, **dadurch gekennzeichnet, dass** die als Wärmeleitung (13) ausgebildete Abgaszuführleitung (12) mit einer Wärmeisolierung (16) versehen ist.

4. Vorrichtung nach einem der vorhergehenden Ansprüche, **dadurch gekennzeichnet, dass** die als Wärmeleitung (13) ausgebildete Abgaszuführleitung (12) sich bis unmittelbar vor die Matrix des Katalysators (11) erstreckt.

5. Vorrichtung nach einem der vorhergehenden Ansprüche, **dadurch gekennzeichnet, dass** die als Wärmetauscher (14) ausgebildete Abgaszuführleitung (12) derart an ihrer Wandung strukturiert ist, dass eine Oberflächenvergrößerung der Wärmeübertragungsfläche und/oder eine Turbulenzbildung des Abgasstromes. in der Abgaszuführleitung (12) erhalten wird.

6. Vorrichtung nach einem der vorhergehenden Ansprüche, **dadurch gekennzeichnet, dass** die als Wärmetauscher (14) ausgebildete Abgaszuführleitung (12) mit einer die Wärmeabfuhr begünstigenden Beschichtung versehen ist.

7. Vorrichtung nach einem der vorhergehenden Ansprüche, **dadurch gekennzeichnet, dass** die Außenfläche der als Wärmetauscher (14) ausgebildeten Abgaszuführleitung (12) mit einem die Wärmeabfuhr begünstigenden Außenluftstrom beaufschlagt ist

8. Vorrichtung nach einem der vorhergehenden Ansprüche, **dadurch gekennzeichnet, dass** das Verstellmittel (15) ein Schaltelement (17) aufweist, das mittels eines Verstellelements (23) parameterabhängig steuerbar ist.

9. Vorrichtung nach einem der vorhergehenden Ansprüche, **dadurch gekennzeichnet, dass** das Schaltelement (17) als entsprechend dem Rohrbündel mit Durchgangsöffnungen (22,36) versehene, drehbare Scheibe ausgebildet ist.

10. Vorrichtung nach einem der vorhergehenden Ansprüche, **dadurch gekennzeichnet, dass** das Verstellelement (23) als mittels eines elektrischen Stellantriebs betätigbare Schaltstange (24) ausgebildet ist.

11. Vorrichtung nach einem der vorhergehenden Ansprüche, **dadurch gekennzeichnet, dass** das Verstellelement (23) als Unterdruckdose ausgebildet ist.

12. Vorrichtung nach einem der vorhergehenden Ansprüche, **dadurch gekennzeichnet, dass** das Verstellelement (23) als elektromagnetische Verstelleinrichtung ausgebildet ist, die eine Wicklung aufweist, mittels weicher das als Anker wirkende Schaltelement (17) in Drehung versetzbar ist.

13. Vorrichtung nach einem der vorhergehenden Ansprüche, **dadurch gekennzeichnet, dass** die Verstellung des Schaltelements (17) in Form einer Zweipunktschaltung erfolgt.

14. Vorrichtung nach einem der vorhergehenden Ansprüche, **dadurch gekennzeichnet, dass** die Verstellung des Schaltelements (17) in stufenlos einstellbaren Zwischenstellungen erfolgt.

15. Vorrichtung nach einem der vorhergehenden Ansprüche, **dadurch gekennzeichnet, dass** die als Wärmeleitung (13) ausgebildete Abgaszuführteitung (12) koaxial in Bezug auf eine Drehachse (19) des Schaltelements (17) angeordnet ist.

16. Vorrichtung nach einem der vorhergehenden Ansprüche, **dadurch gekennzeichnet, dass** die als Wärmeleitung (13) ausgebildete Abgaszuführteitung (12) in Bezug auf eine Drehachse (19) des Schaltelements (17) radial beabstandet angeordnet ist.

17. Vorrichtung nach einem der vorhergehenden Ansprüche, **dadurch gekennzeichnet, dass** das Schaltelement (17) eine zentrale Scheibe und einen in Bezug auf die Scheibe koaxialen, äußeren und retativ zur Scheibe drehbaren Ring aufweist, wobei die Scheibe entsprechend den als Wärmeleitungen (13) und der Ring entsprechend den als Wärmetauscher (14) ausgebildeten Abgaszuführleitungen (12) mit Durchgangsöffnungen (22,36) versehen ist.

18. Vorrichtung nach einem der vorhergehenden Ansprüche, **dadurch gekennzeichnet, dass** das als Scheibe ausgebildete Schaltelement (17) unmittelbar eingangsseitig vor dem Katalysator (11) angeordnet ist.

## Claims

1. Apparatus for feeding exhaust gases from an internal combustion engine to a catalytic converter, in particular a storage catalytic converter, the apparatus comprising a plurality of exhaust-gas feed lines with at least one exhaust-gas feed line (12) as heat line (13) for promoting the transfer of exhaust-gas heat to the catalytic converter (11) and with at least one other exhaust-gas feed line (12) as heat exchanger (14) for promoting the extraction of exhaust-gas heat upstream of the catalytic converter (11), a switchable adjustment means (15) for adjusting a cross section of flow of at least one of the exhaust-gas feed lines (12) being provided, **characterized in that** the exhaust-gas feed lines (12) are arranged spaced apart from one another as a tube bundle until they reach the catalytic converter, with the exhaust-gas feed line (12) which is designed as a heat line (13) being arranged in the interior of the tube bundle and being surrounded circumferentially, but with a spacing in the circumferential direction, by the exhaust-gas feed lines (12) designed as heat exchangers (14), and **in that** the exhaust-gas feed line (12) which is designed as a heat line (13) has a smaller cross section of flow than the exhaust-gas feed line (12) designed as a heat exchanger (14).

2. Apparatus according to Claim 1, **characterized in that** the exhaust-gas feed lines (12) are designed as tubes which are separate from one another.

3. Apparatus according to one of the preceding claims, **characterized in that** the exhaust-gas feed line (12) which is designed as a heat line (13) is provided with a thermal insulation (16).

4. Apparatus according to one of the preceding claims, **characterized in that** the exhaust-gas feed line (12) which is designed as a heat line (13) extends as far as directly in front of the matrix of the catalytic converter (11).

5. Apparatus according to one of the preceding claims, **characterized in that** the exhaust-gas feed line (12) which is designed as a heat exchanger (14) is structured at its wall in such a manner as to increase the surface area available for heat transfer and/or to form turbulence in the exhaust-gas stream in the exhaust-gas feed line (12).

6. Apparatus according to one of the preceding claims, **characterized in that** the exhaust-gas feed line (12) which is designed as a heat exchanger (14) is provided with a coating which promotes the dissipation of heat.

7. Apparatus according to one of the preceding claims, **characterized in that** the outer surface of the exhaust-gas feed line (12) which is designed as a heat exchanger (14) is acted on by an outside air stream which promotes the dissipation of heat.

8. Apparatus according to one of the preceding claims, **characterized in that** the adjustment means (15) has a switching element (17) which can be controlled in a parameter-dependent manner by means of an adjustment element (23).

9. Apparatus according to one of the preceding claims, **characterized in that** the switching element (17) is designed as a rotatable disc provided with passage openings (22, 36) which match the tube bundle.

10. Apparatus according to one of the preceding claims, **characterized in that** the adjustment element (23) is designed as a switching rod (24) which can be actuated by means of an electrical actuating drive.

11. Apparatus according to one of the preceding claims, **characterized in that** the adjustment element (23) is designed as a pressure-reduction cartridge.

12. Apparatus according to one of the preceding claims, **characterized in that** the adjustment element (23) is designed as an electromagnetic adjustment device which has a winding by means of which the switching element (17), which acts as an armature, can be set in rotation.

13. Apparatus according to one of the preceding claims, **characterized in that** the adjustment of the switching element (17) takes place in the form of two-point switching.

14. Apparatus according to one of the preceding claims, **characterized in that** the adjustment of the switching element (17) takes place in continuously variable intermediate positions.

15. Apparatus according to one of the preceding claims, **characterized in that** the exhaust-gas feed line (12) which is designed as a heat line (13) is arranged coaxially with respect to an axis of rotation (19) of the switching element (17).

16. Apparatus according to one of the preceding claims, **characterized in that** the exhaust-gas feed line (12) which is designed as a heat line (13) is arranged at a radial distance with respect to an axis of rotation (19) of the switching element (17).

17. Apparatus according to one of the preceding claims, **characterized in that** the switching element (17) has a central disc and an outer ring which is coaxial with respect to the disc and can rotate relative to the disc, passage openings (22, 36) being provided in the disc corresponding to the exhaust-gas feed lines (12) designed as heat lines (13) and in the ring corresponding to the exhaust-gas feed lines (12) designed as heat exchangers (14).

18. Apparatus according to one of the preceding claims, **characterized in that** the switching element (17), which is designed as a disc, is arranged immediately in front of the catalytic converter (11) on the inlet side.

## Revendications

1. Dispositif pour acheminer des gaz d'échappement d'un moteur à combustion interne à un catalyseur, notamment un catalyseur d'accumulation, dans lequel le dispositif contient une pluralité de conduites d'amenée de gaz d'échappement avec au moins une conduite d'amenée de gaz d'échappement (12) servant de conduite thermique (13) pour le transfert optimal de la chaleur des gaz d'échappement au catalyseur (11) et avec au moins une autre conduite d'amenée de gaz d'échappement (12) servant d'échangeur de chaleur (14) pour le prélèvement optimal de la chaleur des gaz d'échappement avant le catalyseur (11), un moyen de réglage commutable (15) pour le réglage d'une section transversale d'écoulement d'au moins l'une des conduites d'amenée de gaz d'échappement (12) étant prévu, **caractérisé en ce que** les conduites d'amenée de gaz d'échappement (12) sont espacées l'une de l'autre sous forme de faisceau de tubes jusqu'au catalyseur, la conduite d'amenée de gaz d'échappement (12) réalisée sous forme de conduite thermique (13) étant disposée à l'intérieur dans le faisceau de tubes et étant entourée circonférentiellement par les conduites d'amenée de gaz d'échappement (12) réalisées sous forme d'échangeur de chaleur (14) et est espacée de celles-ci dans la direction périphérique et **en ce que** la conduite d'amenée de gaz d'échappement (12) réalisée sous forme de conduite thermique (13) présente une section transversale d'écoulement inférieure par rapport à la conduite d'amenée de gaz d'échappement (12) réalisée sous forme d'échangeur de chaleur (14).

2. Dispositif selon la revendication 1, **caractérisé en ce que** les conduites d'amenée de gaz d'échappement (12) sont réalisées sous forme de tubes séparés les uns des autres.

3. Dispositif selon l'une quelconque des revendications précédentes, **caractérisé en ce que** la conduite d'amenée de gaz d'échappement (12) réalisée sous forme de conduite thermique (13) est pourvue d'une isolation thermique (16).

4. Dispositif selon l'une quelconque des revendications précédentes, **caractérisé en ce que** la conduite d'amenée de gaz d'échappement (12) réalisée sous forme de conduite thermique (13) s'étend jusque directement avant la matrice du catalyseur (11).

5. Dispositif selon l'une quelconque des revendications précédentes, **caractérisé en ce que** la conduite d'amenée de gaz d'échappement (12) réalisée sous forme d'échangeur de chaleur (14) . est structurée au niveau de sa paroi de telle sorte que l'on obtienne une augmentation de la surface de transfert thermique et/ou une formation de turbulence du courant de gaz d'échappement dans la conduite d'amenée de gaz d'échappement (12).

6. Dispositif selon l'une quelconque des revendications précédentes, **caractérisé en ce que** la conduite d'amenée de gaz d'échappement (12) réalisée sous forme d'échangeur de chaleur (14) est pourvue d'un revêtement favorisant la dissipation de la chaleur.

7. Dispositif selon l'une quelconque des revendications précédentes, **caractérisé en ce que** la surface extérieure de la conduite d'amenée de gaz d'échappement (12) réalisée sous forme d'échangeur de chaleur (14) est sollicitée par un courant d'air extérieur favorisant la dissipation de la chaleur.

8. Dispositif selon l'une quelconque des revendications précédentes, **caractérisé en ce que** le moyen de réglage (15) présente un élément de commutation (17) qui peut être commandé au moyen d'un élément de réglage (23) en fonction de paramètres.

9. Dispositif selon l'une quelconque des revendications précédentes, **caractérisé en ce que** l'élément de commutation (17) est réalisé sous forme de disque rotatif pourvu d'ouvertures de passage (22, 36), de manière correspondant au faisceau de tubes.

10. Dispositif selon l'une quelconque des revendications précédentes, **caractérisé en ce que** l'élément de réglage (23) est réalisé sous la forme d'une tige de commande (24) actionnable au moyen d'une commande électrique.

11. Dispositif selon l'une quelconque des revendications précédentes, **caractérisé en ce que** l'élément de réglage (23) est réalisé sous la forme d'une chambre à dépression.

12. Dispositif selon l'une quelconque des revendications précédentes, **caractérisé en ce que** l'élément de réglage (23) est réalisé sous la forme d'un dispositif de réglage électromagnétique, qui présente un enroulement au moyen duquel l'élément de commutation (17) agissant en tant qu'induit peut être mis en mouvement.

13. Dispositif selon l'une quelconque des revendications précédentes, **caractérisé en ce que** le réglage de l'élément de commutation (17) s'effectue sous la forme d'une commutation à deux points.

14. Dispositif selon l'une quelconque des revendications précédentes, **caractérisé en ce que** le réglage de l'élément de commutation (17) s'effectue dans des positions intermédiaires ajustables en continu.

15. Dispositif selon l'une quelconque des revendications précédentes, **caractérisé en ce que** la conduite d'amenée de gaz d'échappement (12) réalisée sous forme de conduite thermique (13) est disposée coaxialement par rapport à un axe de rotation (19) de l'élément de commutation (17).

16. Dispositif selon l'une quelconque des revendications précédentes, **caractérisé en ce que** la conduite d'amenée de gaz d'échappement (12) réalisée sous forme de conduite thermique (13) est disposée de manière espacée radialement par rapport à un axe de rotation (19) de l'élément de commutation (17).

17. Dispositif selon l'une quelconque des revendications précédentes, **caractérisé en ce que** l'élément de commutation (17) présente un disque central et une bague coaxiale au disque, extérieure et pouvant tourner par rapport au disque, le disque étant pourvu d'ouvertures de passage (22, 36) en fonction des conduites d'amenée de gaz d'échappement (12) réalisées en tant que conduites thermiques (13), et la bague étant pourvue d'ouvertures de passage (22, 36) en fonction des conduites d'amenée de gaz d'échappement (12) réalisées en tant qu'échangeur de chaleur (14).

18. Dispositif selon l'une quelconque des revendications précédentes, **caractérisé en ce que** l'élément de commutation (17) réalisé en tant que disque est disposé directement du côté de l'entrée avant le catalyseur (11).
